# EUROPÄISCHE PATENTSCHRIFT

(11) **EP 3 724 040 B1**
(45) Veröffentlichungstag und Bekanntmachung des Hinweises auf die Patenterteilung: **16.02.2022**
(21) Anmeldenummer: 18815973.5
(22) Anmeldetag: 03.12.2018
(51) Int. Cl.: B60R 25/25, B60R 25/30, B60R 11/04

(54) **FAHRZEUG MIT EINER KAMERA ZUR ERFASSUNG EINES KÖRPERTEILS EINES BENUTZERS UND VERFAHREN FÜR DEN BETRIEB DES FAHRZEUGS**
VEHICLE HAVING A CAMERA FOR DETECTING A BODY PART OF A USER AND METHOD FOR THE OPERATION OF THE VEHICLE
VÉHICULE AVEC UNE CAMÉRA POUR DÉTECTER UNE PARTIE DU CORPS D'UN UTILISATEUR ET PROCÉDÉ DE FONCTIONNEMENT DU VÉHICULE

(30) Priorität: 13.12.2017 DE 102017129787
(43) Veröffentlichungstag der Anmeldung: 21.10.2020
(73) Patentinhaber: HELLA GMBH & CO. KGAA, 59552 Lippstadt (DE)
(72) Erfinder: KIRSCH, Oliver, 42111 Wuppertal (DE); HEINE, Tobias, 96052 Bamberg (DE); OLK, Joachim, 59555 Lippstadt (DE); KLENKE, Oliver, 14513 Teltow (DE); SCHLIEP, Frank, 59494 Soest (DE)
(86) Internationale Anmeldenummer: PCT/EP2018/083298
(87) Internationale Veröffentlichungsnummer: WO 2019/115264

(56) Entgegenhaltungen:
- EP-A1- 2 500 218
- EP-A1- 2 757 001
- EP-A1- 3 025 908
- DE-A1-102004 020 255
- DE-A1-102011 111 600
- DE-A1-102014 011 806
- DE-A1-102016 204 860
- DE-C1- 4 414 216
- DE-C1- 10 046 309
- US-B1- 6 323 761

## Beschreibung

Die vorliegende Erfindung bezieht sich auf ein Fahrzeug der im Oberbegriff des Anspruchs 1 genannten Art und ein Verfahren für den Betrieb eines Fahrzeugs der im Oberbegriff des Anspruchs 8 genannten Art.

Derartige Fahrzeuge und Verfahren für deren Betrieb sind aus dem Stand der Technik in zahlreichen Ausführungsvarianten bereits bekannt.

Beispielsweise ist aus der DE 10 2014 011 806 A1 ein Kraftfahrzeug und ein Verfahren zum Bereitstellen einer schlüssellosen Zugangskontrolle zu diesem Kraftfahrzeug bekannt, wobei eine Detektionseinrichtung mindestens ein Objekt neben dem Kraftfahrzeug detektiert und nur bei detektiertem Objekt ein Verbindungssignal an eine Schalteinrichtung aussendet, die Schalteinrichtung bei Empfangen des Verbindungssignals eine Zugangskontrolleinrichtung mit einer Energiequelle elektrisch verbindet, die Zugangskontrolleinrichtung mittels einer Kamera bei einem neben dem Kraftfahrzeug stehenden Benutzer ein Handvenenmuster erfasst und bei Übereinstimmung des erfassten Handvenenmusters mit einem gespeicherten, autorisierten Handvenenmuster ein Entriegelungssignal an eine Schließeinrichtung ausgibt und die Schließeinrichtung bei Empfangen des Entriegelungssignals mindestens eine Fahrzeugtür und/oder Fahrzeugklappe entriegelt.

Ferner ist aus der US 6 323 761 B1, die ein Fahrzeug nach dem Oberbegriff des Anspruchs 1 und ein Verfahren nach dem Oberbegriff des Anspruchs 8 zeigt, ein Zugangsberechtigungssystem bekannt, umfassend eine als Zentralverriegelung ausgebildete Fahrzeugkomponente zur Ausführung einer Fahrzeugfunktion, mindestens eine Kamera zur bildlichen Erfassung eines Körperteils eines Benutzers des Fahrzeugs und eine Steuerung zur Ansteuerung der Kamera, zur Auswertung von Ausgangssignalen der Kamera und zur Ansteuerung der Fahrzeugkomponente, wobei die Fahrzeugkomponente und die Kamera mit der Steuerung signalübertragend verbunden sind und die Fahrzeugkomponente in Abhängigkeit der Auswertung der zu der bildlichen Erfassung des Körperteils mittels der Kamera korrespondierenden Ausgangssignale mittels der Steuerung zur Ausführung der Fahrzeugfunktion ansteuerbar ist, und wobei die Kamera und die Steuerung zur Durchführung einer weiteren Fahrzeugfunktion, nämlich zur Überwachung der Aufmerksamkeit eines Fahrzeugführers, ausgebildet und eingerichtet sind und die Kamera in Abhängigkeit eines an der Steuerung anliegenden Auslösesignals mittels der Steuerung zur Ausführung der bildlichen Erfassung des Körperteils des Benutzers ansteuerbar ist.

Darüber hinaus zeigt die EP 2 757 001 A1 ein weiteres Fahrzeugzugangskontrollsystem, bei dem mittels der Kamera ein Stück Haut einer Zugang zum Kraftfahrzeug begehrenden Person gefilmt wird. Zwecks Gewährung des Zugangs zum Kraftfahrzeug wird die zeitliche Änderung der Färbung des gefilmten Hautstücks mit gespeicherten Herzschlagrhythmus-Referenzdaten von befugten Personen verglichen.

Aus der DE 10 2014 011 806 A1 ist ein weiteres schlüsselloses Zugangssystem für ein Fahrzeug bekannt. Bei dieser Ausführungsform wird ein Handvenenmuster eines Benutzers des Fahrzeugs erfasst und mit einem abgespeicherten, autorisierten Handvenenmuster verglichen.

Das aus der DE 10 2016 204 860 A1 bekannte Türöffnungssystem für ein Fahrzeug umfasst eine nach außen gerichtete Kamera zur Erfassung einer vorbestimmten Aktion von einem Fahrzeugbetreiber.

Die DE 10 2011 111 600 A1 offenbart ein weiteres Verfahren zum Ansteuern einer Klappe eines Fahrzeugs, bei dem ebenfalls eine in der Nähe des Fahrzeugs anwesende Person mittels einer Kamera erfasst wird.

Hier setzt die vorliegende Erfindung an.

Der vorliegenden Erfindung liegt die Aufgabe zugrunde, eine mittels einer Kamera zur bildlichen Erfassung eines Körperteils eines Benutzers eines Fahrzeugs freizugebende Fahrzeugfunktion zu verbessern.

Diese Aufgabe wird durch ein Fahrzeug mit den Merkmalen des Anspruchs 1 gelöst, wonach die Kamera und die Steuerung dazu ausgebildet und eingerichtet sind, in der Kamera und in der Steuerung eine gemeinsame Signatur zu erzeugen und/oder abzuspeichern, wobei die gemeinsame Signatur mittels der Kamera in ein aufgenommenes Bild eintragbar ist und dieses aufgenommene Bild mit der gemeinsamen Signatur anhand der gemeinsamen Signatur mittels der Steuerung als ein mit der Kamera aufgenommenes Bild identifizierbar ist, und durch ein Verfahren für den Betrieb eines Fahrzeugs mit den Merkmalen des Anspruchs 8, wonach in der Kamera und in der Steuerung eine gemeinsame Signatur erzeugt und/oder abgespeichert ist und die Kamera die gemeinsame Signatur in ein mittels der Kamera aufgenommenes Bild einträgt, wobei dieses aufgenommene Bild mit der gemeinsamen Signatur anhand der gemeinsamen Signatur mittels der Steuerung als ein mit der Kamera aufgenommenes Bild identifiziert wird. Die Unteransprüche betreffen vorteilhafte Weiterbildungen der Erfindung. Bei dem Körperteil des Benutzers kann es sich um jedes für eine bildliche Erfassung mittels einer Kamera und für den jeweiligen Anwendungsfall geeignetes Körperteil eines Benutzers handeln. Beispielsweise kann es sich bei dem Körperteil um eine Hand des Benutzers handeln.

Ein wesentlicher Vorteil der Erfindung liegt insbesondere darin, dass eine mittels einer Kamera zur bildlichen Erfassung eines Körperteils eines Benutzers eines Fahrzeugs freizugebende Fahrzeugfunktion verbessert ist. Aufgrund der Tatsache, dass die Kamera und die Steuerung dazu ausgebildet und eingerichtet sind, in der Kamera und in der Steuerung eine gemeinsame Signatur zu erzeugen und/oder abzuspeichern, wobei die gemeinsame Signatur mittels der Kamera in ein aufgenommenes Bild eintragbar ist und dieses aufgenommene Bild mit der gemeinsamen Signatur anhand der gemeinsamen Signatur mittels der Steuerung als ein mit der Kamera aufgenommenes Bild identifizierbar ist, ist die Sicherheit gegen eine unbefugte Ausführung der Fahrzeugfunktion verbessert. Bei der gemeinsamen Signatur kann es sich beispielsweise um einen zwischen der Kamera und der Steuerung synchronisierten Zeitstempel oder um mindestens einen zwischen der Kamera und der Steuerung synchronisierten Lichtblitz handeln. Beispielsweise ist mittels des synchronisierten Zeitstempels oder der synchronisierten Lichtblitze ein zeitlicher Zusammenhang zwischen der bildlichen Erfassung des Körperteils mittels der Kamera und der Auswertung der Ausgangssignale der Kamera in der Steuerung überprüfbar.

In Abhängigkeit des Anliegens des Auslösesignals schaltet die Steuerung die Kamera beispielsweise von der Ausführung der weiteren Fahrzeugfunktion automatisch um zur bildlichen Erfassung eines Körperteils des Benutzers, damit die Fahrzeugkomponente in Abhängigkeit der Auswertung der zu der bildlichen Erfassung des Körperteils mittels der Kamera korrespondierenden Ausgangssignale mittels der Steuerung zur Ausführung der Fahrzeugfunktion ansteuerbar ist. Analoges kann beispielsweise für eine automatische Umschaltung der Kamera von der bildlichen Erfassung des Körperteils des Benutzers zwecks einer automatischen Freigabe einer Fahrzeugfunktion zu der Ausführung der weiteren Fahrzeugfunktion des Fahrzeugs gelten. Möglich ist jedoch auch, dass die weitere Fahrzeugfunktion alternativ oder zusätzlich dazu während eines Fahrzustands des damit ausgestatteten Fahrzeugs zur Ausführung zur Verfügung steht oder automatisch ausgeführt wird. Entsprechend gelten die obigen Ausführungen in analoger Weise für den letztgenannten Fall.

Gleiches gilt für das erfindungsgemäße Verfahren für den Betrieb eines Fahrzeugs.

Eine besonders vorteilhafte Weiterbildung des erfindungsgemäßen Fahrzeugs sieht vor, dass die Kamera zur bildlichen Erfassung von mindestens einem biometrischen Merkmal des Körperteils und die Steuerung zur Auswertung von zu diesem biometrischen Merkmal des Körperteils korrespondierenden Ausgangssignalen der Kamera ausgebildet und eingerichtet sind. Hierdurch ist eine Identifizierung eines speziellen Benutzers des Fahrzeugs auf qualitativ hochwertige Weise ermöglicht. Die Identifizierung eines speziellen Benutzers des Fahrzeugs mittels Biometrie, beispielsweise einer biometrischen Vermessung einer Hand des speziellen Benutzers, gewährleistet diese hohe Qualität der Identifizierung und verhindert damit eine ungewünschte Ausführung der Fahrzeugfunktion, beispielsweise das ungewünschte Entriegeln einer Zentralverriegelung des Fahrzeugs durch Unbefugte. Als biometrische Merkmale beispielsweise eines als Hand eines Benutzers ausgebildeten Körperteils sind die Textur der Haut, der Verlauf der Lebenslinien oder auch Narben und Falten denkbar. Diese Aufzählung ist jedoch lediglich exemplarisch und nicht abschließend.

Analoges gilt für eine besonders vorteilhafte Weiterbildung des erfindungsgemäßen Verfahrens, wonach mittels der Kamera und der Steuerung mindestens ein biometrisches Merkmal des Körperteils bildlich erfasst und ausgewertet wird.

Grundsätzlich ist das Auslösesignal nach Art und Erzeugung in weiten geeigneten Grenzen frei wählbar. Vorteilhafterweise ist das Auslösesignal in Abhängigkeit eines Näherungssensors zur Detektion einer Annäherung des Benutzers an die Kamera erzeugbar. Auf diese Weise ist beispielsweise ein energiesparender Betrieb des Fahrzeugs ermöglicht. Der Näherungssensor ist dabei nach Art, Funktionsweise, Material, Dimensionierung, Anordnung und Anzahl ebenfalls in weiten geeigneten Grenzen frei wählbar. Der Fachmann wird je nach den Erfordernissen des Einzelfalls den geeigneten Näherungssensor auswählen. Besonders vorteilhaft ist es, wenn auch der Näherungssensor für mindestens eine andere Fahrzeugfunktion verwendbar ist. Beispielsweise kann es sich bei der anderen Fahrzeugfunktion um eine Einparkhilfe oder dergleichen handeln.

Gleiches gilt für eine vorteilhafte Weiterbildung des erfindungsgemäßen Verfahrens, wonach das Auslösesignal in Abhängigkeit eines Näherungssensors zur Detektion einer Annäherung des Benutzers an die Kamera erzeugt wird.

Eine andere besonders vorteilhafte Weiterbildung des erfindungsgemäßen Fahrzeugs sieht vor, dass mindestens eine der mindestens einen Kamera zur bildlichen Erfassung des Körperteils des Benutzers in zwei voneinander verschiedenen Wellenlängenbereichen ausgebildet und eingerichtet ist oder eine von mindestens zwei Kameras zur bildlichen Erfassung des Körperteils des Benutzers in einem ersten Wellenlängenbereich und die andere der mindestens zwei Kameras zur bildlichen Erfassung des Körperteils des Benutzers in einem von dem ersten Wellenlängenbereich verschiedenen zweiten Wellenlängenbereich ausgebildet und eingerichtet sind und die Steuerung zur Auswertung von dazu korrespondierenden Ausgangssignalen der mindestens einen Kamera ausgebildet und eingerichtet ist. Hierdurch ist die Qualität der bildlichen Erfassung des Körperteils des Benutzers des Fahrzeugs verbessert. Darüber hinaus ist eine Redundanz geschaffen, so dass beispielsweise eine Fehlfunktion in der bildlichen Erfassung des Körperteils in dem einen Wellenlängenbereich mittels einer ordnungsgemäßen Funktion der bildlichen Erfassung des Körperteils in dem anderen Wellenlängenbereich zumindest teilweise ausgleichbar ist.

Analoges gilt für eine weitere besonders vorteilhafte Weiterbildung des erfindungsgemäßen Verfahrens, wonach die bildliche Erfassung des Körperteils des Benutzers in zwei voneinander verschiedenen Wellenlängenbereichen erfolgt und die Steuerung dazu korrespondierende Ausgangssignale auswertet.

Grundsätzlich sind die zwei Wellenlängenbereiche zur bildlichen Erfassung des Körperteils des Benutzers des Fahrzeugs nach Art, jeweiliger Bereichsgröße und nach Lage des jeweiligen Wellenlängenbereichs in weiten geeigneten Grenzen frei wählbar. Beispielsweise kann die Auswahl in Abhängigkeit der für die weitere Fahrzeugfunktion bereits bei dem Fahrzeug zur Verfügung stehenden mindestens einen Kamera erfolgen. Vorteilhafterweise ist bei der vorgenannten Ausführungsform des erfindungsgemäßen Fahrzeugs vorgesehen, dass mindestens eine der mindestens einen Kamera zur bildlichen Erfassung des Körperteils des Benutzers in einem zu sichtbarem Licht korrespondierenden ersten Wellenlängenbereich und in einem zu Infrarotstrahlung korrespondierenden zweiten Wellenlängenbereich ausgebildet und eingerichtet ist oder eine von mindestens zwei Kameras zur bildlichen Erfassung des Körperteils des Benutzers in einem zu sichtbarem Licht korrespondierenden ersten Wellenlängenbereich und die andere der mindestens zwei Kameras zur bildlichen Erfassung des Körperteils des Benutzers in einem zu Infrarotstrahlung korrespondierenden zweiten Wellenlängenbereich ausgebildet und eingerichtet sind und die Steuerung zur Auswertung von dazu korrespondierenden Ausgangssignalen der mindestens einen Kamera ausgebildet und eingerichtet ist. Derartige Kameras sind technisch ausgereift und stehen in einer großen Artenvielfalt zur Auswahl. Entsprechend ist ein großer Anwendungsbereich mit gleichzeitig geringen Kosten ermöglicht.

Gleiches gilt für eine vorteilhafte Weiterbildung der vorgenannten Ausführungsform des erfindungsgemäßen Verfahrens, wonach die bildliche Erfassung des Körperteils des Benutzers in einem zu sichtbarem Licht korrespondierenden ersten Wellenlängenbereich und in einem zu Infrarotstrahlung korrespondierenden zweiten Wellenlängenbereich erfolgt und die Steuerung dazu korrespondierende Ausgangssignale auswertet.

Eine weitere vorteilhafte Weiterbildung des erfindungsgemäßen Fahrzeugs sieht vor, dass mindestens einer der mindestens einen Kamera eine Kamerabeleuchtungsvorrichtung des Fahrzeugs zugeordnet ist, wobei der Wellenlängenbereich des von der Kamerabeleuchtungsvorrichtung emittierten Lichts auf den Wellenlängenbereich der dazu korrespondierenden Kamera abgestimmt ausgebildet ist und die Kamerabeleuchtungsvorrichtung in Abhängigkeit eines Betriebszustands der Kamera mittels der Steuerung zur Emittierung von Licht ansteuerbar ist. Hierdurch ist die Qualität der bildlichen Erfassung des Körperteils des Benutzers des Fahrzeugs weiter verbessert. Insbesondere gilt dies bei schlechten Sichtverhältnissen, wie beispielsweise in der Nacht. Besonders vorteilhaft ist es, wenn die Kamerabeleuchtungsvorrichtung ebenfalls für zusätzliche Fahrzeugfunktionen verwendbar ist. Beispielsweise kann die Kamerabeleuchtungsvorrichtung, sofern das damit emittierte Licht in dem Wellenlängenbereich von sichtbarem Licht liegt, in dem Parkbetrieb des Fahrzeugs zur optischen Lenkung des Benutzers zur leichteren Auffindung des Fahrzeugs verwendet werden. Denkbar wäre es auch, die Kamerabeleuchtungsvorrichtung zur Unterstützung des Benutzers bei dem Verlassen des Fahrzeugs zu benutzen.

Analoges gilt für eine vorteilhafte Weiterbildung des erfindungsgemäßen Verfahrens, wonach mindestens einer der mindestens einen Kamera eine Kamerabeleuchtungsvorrichtung des Fahrzeugs zugeordnet ist, wobei der Wellenlängenbereich des von der Kamerabeleuchtungsvorrichtung emittierten Lichts auf den Wellenlängenbereich der dazu korrespondierenden Kamera abgestimmt ausgebildet ist und die Steuerung die Kamerabeleuchtungsvorrichtung in Abhängigkeit eines Betriebszustands der Kamera zur Emittierung von Licht ansteuert.

Eine besonders vorteilhafte Weiterbildung des erfindungsgemäßen Fahrzeugs sieht vor, dass das Fahrzeug eine Positionierhilfevorrichtung zur Positionierung des Körperteils des Benutzers zwecks dessen bildlicher Erfassung mittels mindestens einer der mindestens einen Kamera aufweist, wobei die Positionierhilfevorrichtung in Abhängigkeit eines Betriebszustands der Kamera mittels der Steuerung zur Abgabe eines von dem Benutzer optisch und/oder akustisch wahrnehmbaren Positionierhilfesignals ansteuerbar ist. Auf diese Weise ist eine ordnungsgemäße Ausrichtung des Körperteils des Benutzers für die bildliche Erfassung des Körperteils mittels der Kamera gefördert. Entsprechend ist auch die Qualität der bildlichen Erfassung des Körperteils weiter gesteigert, während die dafür erforderliche Zeit reduziert ist. Darüber hinaus zeigt ein derartiges Positionierhilfesignal dem Benutzer gleichzeitig an, dass die Kamera zur bildlichen Erfassung des Körperteils bereit ist. Der Benutzer wird also mittels des Positionierhilfesignals dazu aufgefordert, das Körperteil zu dessen bildlicher Erfassung mittels der Kamera gemäß dem Positionierhilfesignal zu positionieren. Denkbar ist jedoch auch, dass das Fahrzeug eine von der Positionierhilfevorrichtung separate Vorrichtung zur Information des Benutzers über den Betriebszustand der Kamera zur bildlichen Erfassung des Körperteils aufweist, wobei diese Vorrichtung in Abhängigkeit eines Betriebszustands der Kamera mittels der Steuerung zur Abgabe eines von dem Benutzer optisch und/oder akustisch wahrnehmbaren Betriebssignals ansteuerbar ist. Ein derartiges Betriebssignal, eine Hand oder dergleichen, könnte beispielsweise auf das Fahrzeug und/oder auf eine Fahrbahn des Fahrzeugs projiziert werden. Entsprechend wäre die Vorrichtung zur Information des Benutzers in diesem Fall als eine Projektionsvorrichtung ausgebildet.

Gleiches gilt für eine besonders vorteilhafte Weiterbildung des erfindungsgemäßen Verfahrens, wonach das Fahrzeug eine Positionierhilfevorrichtung zur Positionierung des Körperteils des Benutzers zwecks dessen bildlicher Erfassung mittels mindestens einer der mindestens einen Kamera aufweist, wobei die Steuerung die Positionierhilfevorrichtung in Abhängigkeit eines Betriebszustands der Kamera zur Abgabe eines von dem Benutzer optisch und/oder akustisch wahrnehmbaren Positionierhilfesignals ansteuert.

Eine andere vorteilhafte Weiterbildung des erfindungsgemäßen Fahrzeugs sieht vor, dass das Fahrzeug eine Quittierungsvorrichtung zur Quittierung der bildlichen Erfassung des Körperteils des Benutzers mittels mindestens einer der mindestens einen Kamera aufweist, wobei die Quittierungsvorrichtung in Abhängigkeit einer ordnungsgemäßen bildlichen Erfassung des Körperteils des Benutzers mittels der Steuerung zur Abgabe eines von dem Benutzer optisch und/oder akustisch wahrnehmbaren Quittierungssignals ansteuerbar ist. Hierdurch ist eine Information des Benutzers des Fahrzeugs über die ordnungsgemäße Funktion und die bildliche Erfassung des Körperteils in einer für die Auswertung erforderlichen Qualität ermöglicht.

Gleiches gilt für eine vorteilhafte Weiterbildung des erfindungsgemäßen Verfahrens, wonach das Fahrzeug eine Quittierungsvorrichtung zur Quittierung der bildlichen Erfassung des Körperteils des Benutzers mittels mindestens einer der mindestens einen Kamera aufweist, wobei die Steuerung die Quittierungsvorrichtung in Abhängigkeit einer ordnungsgemäßen bildlichen Erfassung des Körperteils des Benutzers mittels der Kamera zur Abgabe eines von dem Benutzer optisch und/oder akustisch wahrnehmbaren Quittierungssignals ansteuert.

Eine weitere vorteilhafte Weiterbildung des erfindungsgemäßen Fahrzeugs sieht vor, dass mindestens eine der mindestens einen Kamera an einem Außenrückspiegel und/oder an einem Innenrückspiegel des Fahrzeugs angeordnet ist. Auf diese Weise ist die Kamera für den Benutzer zum Zweck der bildlichen Erfassung des Körperteils des Benutzers leicht erreichbar. Darüber hinaus sind in den Außenrückspiegeln und in dem Innenrückspiegel oft bereits Kameras für weitere Fahrzeugfunktionen vorgesehen, so dass zum einen eine Nutzung derartiger Kameras für die bildliche Erfassung des Körperteils ermöglicht ist. Zum anderen gibt es in derartigen Außenrückspiegeln und in derartigen Innenrückspiegeln bereits geeigneten Bauraum für Kameras zur bildlichen Erfassung des Körperteils des Benutzers des damit ausgestatteten Fahrzeugs. Denkbar wäre auch eine Kombination von einer Kamera für einen Außenbereich des Fahrzeugs, beispielsweise als Teil mindestens eines der Außenrückspiegel, mit einer Kamera für einen Innenbereich des Fahrzeugs, beispielsweise als Teil des Innenrückspiegels.

Grundsätzlich ist die mindestens eine Kamera nach Art, Funktionsweise, Dimensionierung, Material, Anordnung und Anzahl in weiten geeigneten Grenzen frei wählbar. Eine besonders vorteilhafte Weiterbildung des erfindungsgemäßen Fahrzeugs sieht jedoch vor, dass eine der mindestens einen Kamera als eine Kamera mit einem Weitwinkelobjektiv, bevorzugt als eine Kamera mit einem Fischaugenobjektiv, besonders bevorzugt als eine Kamera mit einem Sichtfeld von größer oder gleich 180°, ausgebildet ist und die Steuerung zur Auswertung von dazu korrespondierenden Ausgangssignalen der mindestens einen Kamera ausgebildet und eingerichtet ist. Mittels eines Weitwinkelobjektivs ist ein großer Erfassungsbereich der Kamera ermöglicht. Dies gilt besonders für Fischaugenobjektive, insbesondere für Kameraobjektive mit einem Sichtfeld von größer oder gleich 180°. Entsprechend sind Kameras mit derartigen Objektiven neben der bildlichen Erfassung des Körperteils des Benutzers für eine Vielzahl von voneinander verschiedenen Fahrzeugfunktionen, beispielsweise einer großräumigen bildlichen Erfassung der Umgebung des Fahrzeugs, einsetzbar.

Eine andere vorteilhafte Weiterbildung des erfindungsgemäßen Fahrzeugs sieht vor, dass eine der mindestens einen Kamera als eine Kamera zur Benutzerzustandsbeobachtung ausgebildet und eingerichtet ist und die Steuerung zur Auswertung von dazu korrespondierenden Ausgangssignalen der mindestens einen Kamera ausgebildet und eingerichtet ist. Beispielsweise kann als weitere Fahrzeugfunktion mittels der Benutzerzustandsbeobachtung der Aufmerksamkeitsgrad des Benutzers, beispielsweise des Fahrzeugführers des Fahrzeugs, auf dem Fachmann bekannte Weise kontrolliert werden. Dies ist jedoch rein exemplarisch. Die Benutzerzustandsbeobachtung kann alternativ oder zusätzlich zur weiteren Fahrzeugfunktion auch für die Fahrzeugfunktion verwendet werden. Der Begriff "Benutzerzustand" meint die psychologische und physiologische Verfassung des Benutzers des Fahrzeugs und damit dessen Fähigkeit, das Fahrzeug verkehrssicher zu beherrschen. Beispielsweise könnte Müdigkeit, der Einfluss von Drogen oder Alkohol, oder eine sonstige psychische oder physische Störung dazu führen, dass der Benutzer nicht mehr in der Lage ist, das Fahrzeug im Verkehr zu führen. Entsprechend könnte auf Basis der Benutzerzustandsbeobachtung, beispielsweise der Beobachtung des Lidschlags der Augen, die Ausführung der Fahrzeugfunktion, beispielsweise eines Starts des Antriebsmotors des Fahrzeugs, gesperrt sein.

Eine besonders vorteilhafte Weiterbildung des erfindungsgemäßen Fahrzeugs sieht vor, dass die Kamera zur bildlichen Erfassung von mindestens einem biometrischen Merkmal des Körperteils und die Steuerung zur Auswertung von zu diesem biometrischen Merkmal des Körperteils korrespondierenden Ausgangssignalen der Kamera ausgebildet und eingerichtet sind, wobei mindestens eines des mindestens einen biometrischen Merkmals des Körperteils als ein biometrisches Merkmal für die Lebenderkennung ausgebildet ist. Auf diese Weise ist beispielsweise gewährleistet, dass eine ungewünschte Ausführung der Fahrzeugfunktion durch Unbefugte mittels in das Fahrzeug eingespeister zweidimensionaler Bilder nicht möglich ist.

Analoges gilt für eine besonders vorteilhafte Weiterbildung des erfindungsgemäßen Verfahrens, wonach mindestens eines des mindestens einen biometrischen Merkmals des Körperteils als ein biometrisches Merkmal für die Lebenderkennung ausgebildet ist.

Eine vorteilhafte Weiterbildung der vorgenannten Ausführungsform des erfindungsgemäßen Fahrzeugs sieht vor, dass mindestens eines des mindestens einen biometrischen Merkmals für die Lebenderkennung als ein menschlicher Puls ausgebildet ist. Hierdurch ist das mindestens eine biometrische Merkmal des Körperteils zur Lebenderkennung besonders wirksam ausgebildet.

Gleiches gilt für eine vorteilhafte Weiterbildung der vorgenannten Ausführungsform des erfindungsgemäßen Verfahrens, wonach mindestens eines des mindestens einen biometrischen Merkmals für die Lebenderkennung als ein menschlicher Puls ausgebildet ist.

Eine andere vorteilhafte Weiterbildung des erfindungsgemäßen Fahrzeugs nach Anspruch 5 sieht vor, dass mindestens einer der mindestens einen Kamera eine Kamerabeleuchtungsvorrichtung des Fahrzeugs zugeordnet ist, wobei der Wellenlängenbereich des von der Kamerabeleuchtungsvorrichtung emittierten Lichts auf den Wellenlängenbereich der dazu korrespondierenden Kamera abgestimmt ausgebildet ist und die Kamerabeleuchtungsvorrichtung in Abhängigkeit eines Betriebszustands der Kamera mittels der Steuerung zur Emittierung von Licht ansteuerbar ist, und wobei mindestens eines des mindestens einen biometrischen Merkmals als ein dreidimensionaler Verlauf einer äußeren oder einer inneren Oberfläche des Körperteils ausgebildet ist und mittels der Kamerabeleuchtungsvorrichtung Licht mit einem vorher festgelegten Muster auf das Körperteil projezierbar ist. Hierdurch ist alternativ oder zusätzlich zu der Erfassung des menschlichen Pulses für die Lebenderkennung ein Schutz vor einer unbefugten Ausführung der Fahrzeugfunktion mittels eines in das Fahrzeug eingespeisten zweidimensionalen Bildes auf technisch einfache Weise realisiert.

Gleiches gilt für eine vorteilhafte Weiterbildung des erfindungsgemäßen Verfahrens nach Anspruch 10, wonach mindestens eines des mindestens einen biometrischen Merkmals als ein dreidimensionaler Verlauf einer äußeren oder einer inneren Oberfläche des Körperteils ausgebildet ist, wobei mittels der Kamerabeleuchtungsvorrichtung Licht mit einem vorher festgelegten Muster auf das Körperteil projeziert wird.

Eine andere vorteilhafte Weiterbildung des erfindungsgemäßen Fahrzeugs sieht vor, dass die Kamera zur bildlichen Erfassung und die Steuerung zur Auswertung von einer Bewegung des Körperteils ausgebildet und eingerichtet sind. Hierdurch ist die Sicherheit gegen eine unbefugte Ausführung der Fahrzeugfunktion auf technisch besonders einfache Weise zusätzlich verbessert.

Gleiches gilt für eine vorteilhafte Weiterbildung des erfindungsgemäßen Verfahrens, wonach eine Bewegung des Körperteils mittels der Kamera bildlich erfasst und mittels der Steuerung ausgewertet wird.

Eine weitere besonders vorteilhafte Weiterbildung des erfindungsgemäßen Fahrzeugs sieht vor, dass die Kamera in Abhängigkeit des Auslösesignals mittels einer Kameraantriebsvorrichtung automatisch von einer zur Durchführung der weiteren Fahrzeugfunktion optimierten ersten Kameraausrichtung in eine zur Ausführung der Fahrzeugfunktion optimierten zweiten Kameraausrichtung überführbar ist. Auf diese Weise ist es möglich, die Kamera zum einen optimal für die Durchführung der weiteren Fahrzeugfunktion und zum anderen optimal für die Ausführung der Fahrzeugfunktion auszurichten. Qualitätseinbußen durch einen Kompromiss bei der Ausrichtung der Kamera sind dadurch wirksam verhindert.

Analoges gilt für eine weitere besonders vorteilhafte Weiterbildung des erfindungsgemäßen Verfahrens, wonach die Kamera in Abhängigkeit des Auslösesignals mittels einer Kameraantriebsvorrichtung automatisch von einer zur Durchführung der weiteren Fahrzeugfunktion optimierten ersten Kameraausrichtung in eine zur Ausführung der Fahrzeugfunktion optimierten zweiten Kameraausrichtung überführt wird.

Eine vorteilhafte Weiterbildung der vorgenannten Ausführungsform des erfindungsgemäßen Fahrzeugs sieht vor, dass die erste Kameraausrichtung und die zweite Kameraausrichtung vorher festgelegt und in der Steuerung zur Ansteuerung der Kameraantriebsvorrichtung abgespeichert sind. Hierdurch ist die automatische Kameraausrichtung auf technisch sehr einfache Weise realisiert.

Gleiches gilt für eine vorteilhafte Weiterbildung der vorgenannten Ausführungsform des erfindungsgemäßen Verfahrens, wonach die erste Kameraausrichtung und die zweite Kameraausrichtung vorher festgelegt und in der Steuerung zur Ansteuerung der Kameraantriebsvorrichtung abgespeichert sind.

Eine zu der letztgenannten Ausführungsform des erfindungsgemäßen Fahrzeugs alternative vorteilhafte Weiterbildung sieht vor, dass die erste Kameraausrichtung vorher festgelegt und in der Steuerung zur Ansteuerung der Kameraantriebsvorrichtung abgespeichert ist und die zweite Kameraausrichtung zur Ausführung der Fahrzeugfunktion in Abhängigkeit der mittels der Kamera erfassten Bilder des Körperteils mittels der Kameraantriebsvorrichtung automatisch einstellbar ist. Auf diese Weise ist die zweite Kameraausrichtung zur Ausführung der Fahrzeugfunktion variabler ausgebildet, so dass die Qualität bei der bildlichen Erfassung des Körperteils verbessert ist. Die Kamera wird also anhand der mittels der Kamera erfassten Bilder automatisch in die zweite Kameraausrichtung zur Ausführung der Fahrzeugfunktion überführt, beispielsweise bis eine Optik der Kamera, also der Hauptstrahl eines Objektivs der Kamera, im Wesentlichen senkrecht zu einer Handfläche der Hand, positioniert ist. Zeitlich danach kann dann das Körperteil, also beispielsweise die Handfläche der Hand, mittels der Kamera in guter Qualität erfasst werden.

Analoges gilt für eine zu der letztgenannten Ausführungsform des erfindungsgemäßen Verfahrens alternative vorteilhafte Weiterbildung, wonach die erste Kameraausrichtung vorher festgelegt und in der Steuerung zur Ansteuerung der Kameraantriebsvorrichtung abgespeichert ist und die zweite Kameraausrichtung zur Ausführung der Fahrzeugfunktion in Abhängigkeit der mittels der Kamera erfassten Bilder des Körperteils mittels der Kameraantriebsvorrichtung automatisch eingestellt wird.

Ferner sieht eine vorteilhafte Weiterbildung des erfindungsgemäßen Fahrzeugs vor, dass die Fahrzeugkomponente zusätzlich mittels einer tragbaren Fernbedienung zur Ausführung der Fahrzeugfunktion ansteuerbar ist, wobei die Fernbedienung in Abhängigkeit einer Ansteuerung der Fahrzeugkomponente mittels der Kamera zwischen einem Aktivierungszustand, in dem die Fahrzeugkomponente mittels der Fernbedienung ansteuerbar ist, und einem Deaktivierungszustand, in dem die Fahrzeugkomponente mittels der Fernbedienung nicht ansteuerbar ist, automatisch hin und her überführbar ist. Hierdurch ist es möglich, die Fahrzeugkomponente zur Ausführung der Fahrzeugfunktion grundsätzlich einerseits mittels einer an sich bekannten Fernbedienung und andererseits in Abhängigkeit der bildlichen Erfassung des Körperteils zu bedienen. Beispielsweise ist es gemäß dieser Weiterbildung möglich, bei einem Ausflug an einen Badesee die Fernbedienung im Fahrzeug zurückzulassen. Eine als Zentralverriegelung ausgebildete Fahrzeugkomponente des Fahrzeugs könnte mittels der bildlichen Erfassung beim Verlassen des Fahrzeugs zum einen verriegelt werden. Zum anderen könnte dabei auch die in dem Fahrzeug verbleibende Fernbedienung automatisch in deren Deaktivierungszustand überführt werden. Das Fahrzeug könnte also mittels der Fernbedienung nicht bedient und damit weder geöffnet noch gestartet werden. Kehrt der Benutzer von dem Badesee zurück zu dem Fahrzeug, kann er die Zentralverriegelung mittels der bildlichen Erfassung wieder entriegeln und dabei gleichzeitig die Fernbedienung in deren Aktivierungszustand überführen. Entsprechend könnte das Fahrzeug danach mittels der Fernbedienung auf gewohnte Weise verriegelt, entriegelt und/oder gestartet werden.

Gleiches gilt für eine vorteilhafte Weiterbildung des erfindungsgemäßen Verfahrens, wonach die Fahrzeugkomponente zusätzlich mittels einer tragbaren Fernbedienung zur Ausführung der Fahrzeugfunktion ansteuerbar ist, wobei die Fernbedienung in Abhängigkeit einer Ansteuerung der Fahrzeugkomponente mittels der Kamera zwischen einem Aktivierungszustand, in dem die Fahrzeugkomponente mittels der Fernbedienung ansteuerbar ist, und einem Deaktivierungszustand, in dem die Fahrzeugkomponente mittels der Fernbedienung nicht ansteuerbar ist, automatisch hin und her überführt wird.

Anhand der beigefügten, grob schematischen Zeichnung wird die Erfindung nachfolgend näher erläutert. Dabei zeigt die einzige:

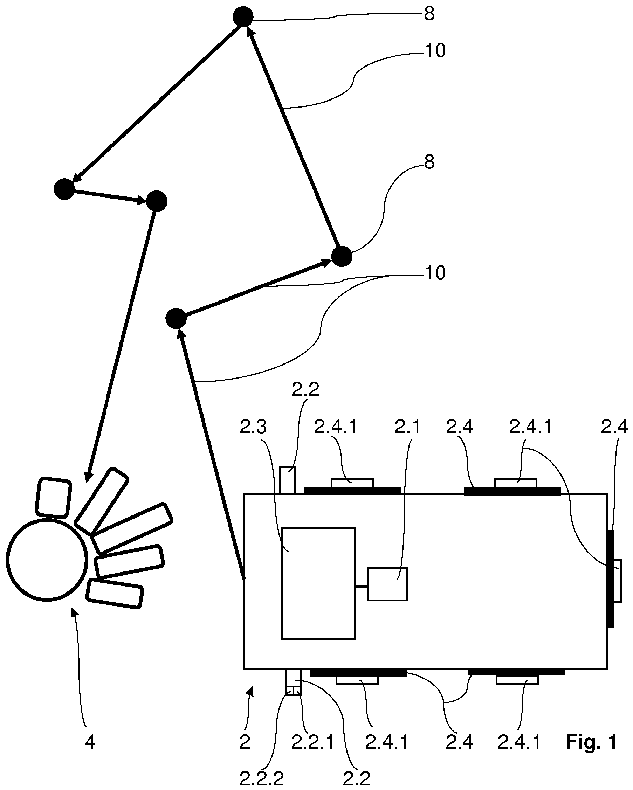

- Fig. 1: ein Ausführungsbeispiel eines erfindungsgemäßen Fahrzeugs in einer teilweisen Darstellung.

In Fig. 1 ist ein Ausführungsbeispiel eines erfindungsgemäßen Fahrzeugs 2 dargestellt. Das Fahrzeug 2 ist als ein Kraftfahrzeug 2, nämlich ein Personenkraftwagen 2, ausgebildet. Die Erfindung ist jedoch nicht darauf beschränkt. Vielmehr ist der Begriff "Fahrzeug" weit auszulegen und umfasst alle Arten von Fahrzeugen, nicht lediglich Landfahrzeuge.

Das Fahrzeug 2 umfasst eine Fahrzeugkomponente 2.1 zur Ausführung einer Fahrzeugfunktion, mindestens eine in einen Außenrückspiegel 2.2 des Fahrzeugs 2 eingebaute Kamera 2.2.1 zur bildlichen Erfassung eines Körperteils 4 eines Benutzers des Fahrzeugs 2, beispielsweise eines Fahrzeugführers des Fahrzeugs 2, und eine Steuerung 2.3 zur Ansteuerung der Kamera 2.2.1, zur Auswertung von Ausgangssignalen der Kamera 2.2.1 und zur Ansteuerung der Fahrzeugkomponente 2.1, wobei die Fahrzeugkomponente 2.1 und die Kamera 2.2.1 mit der Steuerung 2.3 signalübertragend verbunden sind und die Fahrzeugkomponente 2.1 in Abhängigkeit der Auswertung der zu der bildlichen Erfassung des Körperteils 4 mittels der Kamera 2.2.1 korrespondierenden Ausgangssignale mittels der Steuerung 2.3 zur Ausführung der Fahrzeugfunktion ansteuerbar ist. Bei dem Körperteil 4 des Benutzers handelt es sich beispielsweise um die linke Hand 4 des Benutzers. Jedoch sind auch andere Körperteile des Benutzers erfindungsgemäß für eine biometrische Auswertung in der Steuerung 2.3 möglich.

Die Fahrzeugkomponente 2.1 ist als ein Zugangssystem 2.1 ausgebildet, mittels dem ein Zugang zu dem Fahrzeug 2 auf dem Fachmann bekannte Weise in einem Entriegelungszustand des Zugangssystems 2.1 ermöglicht und in einem Verriegelungszustand des Zugangssystems 2.1 verhindert ist. In dem Entriegelungszustand des Zugangssystems 2.1 lässt sich jede der insgesamt fünf Türen 2.4 des Fahrzeugs 2 mittels eines Türgriffs 2.4.1 öffnen. Die Kamera 2.2.1 ist in den linken Außenrückspiegel 2.2 des Fahrzeugs 2 eingebaut und als eine Kamera 2.2.1 mit einem Fischaugenobjektiv ausgebildet, das ein Sichtfeld von 180° aufweist. Das Fischaugenobjektiv ist in der Fig. 1 nicht dargestellt und auf dem Fachmann bekannte Weise ausgebildet. Entsprechend ist ein Erfassungsbereich der Kamera 2.2.1 180° groß. Die Steuerung 2.3 ist ferner mit in den Türgriffen 2.4.1 der Türen 2.4 eingebauten Näherungssensoren zur Detektion einer Annäherung des Benutzers an die Kamera 2.2.1 signalübertragend verbunden. Die Näherungssensoren sind als kapazitive Sensoren ausgebildet und in der Fig. 1 nicht dargestellt. Der Begriff "Tür" ist weit auszulegen und umfasst bei dem vorliegenden Ausführungsbeispiel sowohl die Fahrertür 2.4, die Beifahrertür 2.4, die beiden Hecktüren 2.4 wie auch die Heckklappe 2.4.

Die Kamera 2.2.1 ist zur bildlichen Erfassung von mindestens einem biometrischen Merkmal des Körperteils 4 und die Steuerung 2.3 ist zur Auswertung von zu diesem biometrischen Merkmal des Körperteils 4 korrespondierenden Ausgangssignalen ausgebildet und eingerichtet. Hierdurch ist eine Identifizierung eines speziellen Benutzers des Fahrzeugs 2 auf qualitativ hochwertige Weise ermöglicht. Die Identifizierung eines speziellen Benutzers des Fahrzeugs 2 mittels Biometrie, beispielsweise einer biometrischen Vermessung der Hand 2 des speziellen Benutzers, gewährleistet diese hohe Qualität der Identifizierung und verhindert damit eine ungewünschte Ausführung der Fahrzeugfunktion, beispielsweise das ungewünschte Entriegeln Zugangssystems 2.1 des Fahrzeugs 2 durch Unbefugte. Als biometrische Merkmale beispielsweise der Hand 4 des Benutzers sind die Textur der Haut, der Verlauf der Lebenslinien oder auch Narben und Falten denkbar. Diese Aufzählung ist jedoch lediglich exemplarisch und nicht abschließend.

Bei dem vorliegenden Ausführungsbeispiel ist mindestens eines des mindestens einen biometrischen Merkmals des Körperteils 4 als ein biometrisches Merkmal für die Lebenderkennung, nämlich als ein menschlicher Puls, ausgebildet.

Die Kamera 2.2.1 und die Steuerung 2.3 sind zur Durchführung einer weiteren Fahrzeugfunktion ausgebildet und eingerichtet. Darüber hinaus ist die Kamera 2.2.1 in Abhängigkeit eines an der Steuerung 2.3 anliegenden Auslösesignals mittels der Steuerung 2.3 zur Ausführung der bildlichen Erfassung des Körperteils 4 des Benutzers ansteuerbar. In Abhängigkeit der Detektion einer Annäherung des Benutzers an die Kamera 2.2.1 mittels einer der Näherungssensoren liegt das Auslösesignal an der Steuerung 2.3 an und die Steuerung 2.3 steuert die Kamera 2.2.1 zur bildlichen Erfassung des Körperteils 4 des Benutzers an. Bei der weiteren Fahrzeugfunktion handelt es sich bei dem vorliegenden Ausführungsbeispiel um eine Umgebungserfassung, auch Surround View genannt. Die Kamera 2.2.1 ist entsprechend als eine Umgebungserfassungskamera 2.2.1, auch Surround View Kamera genannt, ausgebildet und eingerichtet, mittels der zumindest ein Teil einer Umgebung des Fahrzeugs 2 bildlich erfassbar ist. Die Umgebung des Fahrzeugs 2 ist nicht näher dargestellt. Dieses Bild von zumindest einem Teil der Umgebung des Fahrzeugs 2 kann dann beispielsweise mittels weiterer Umgebungserfassungskameras des Fahrzeugs auf dem Fachmann bekannte Weise zu einem vollständigen Bild der Umgebung des Fahrzeugs 2 fusioniert werden. Die weiteren Umgebungserfassungskameras könnten unter anderem beispielsweise in dem anderen Außenrückspiegel 2.2 auf der rechten Seite des Fahrzeugs 2 eingebaut sein.

Die Kamera 2.2.1 bei dem vorliegenden Ausführungsbeispiel ist zur bildlichen Erfassung des Körperteils 4 des Benutzers in zwei voneinander verschiedenen Wellenlängenbereichen ausgebildet und eingerichtet und die Steuerung 2.3 ist zur Auswertung von dazu korrespondierenden Ausgangssignalen der Kamera 2.2.1 ausgebildet und eingerichtet. Konkret ist die Kamera 2.2.1 zur bildlichen Erfassung des Körperteils 4 des Benutzers in einem zu sichtbarem Licht korrespondierenden ersten Wellenlängenbereich und in einem zu Infrarotstrahlung, nämlich Nahinfrarotstrahlung, korrespondierenden zweiten Wellenlängenbereich ausgebildet und eingerichtet, und die Steuerung ist zur Auswertung von dazu korrespondierenden Ausgangssignalen der Kamera 2.2.1 ausgebildet und eingerichtet. Hierdurch ist die Qualität der bildlichen Erfassung des Körperteils 4 des Benutzers und damit die Qualität der Auswertung der Ausgangssignale der Kamera 2.2.1 in der Steuerung 2.3 verbessert.

Zur weiteren Steigerung der Qualität der bildlichen Erfassung mittels der Kamera 2.2.1 sowie der Qualität der Auswertung von deren Ausgangssignalen in der Steuerung 2.3 weist das Fahrzeug 2 noch weitere Baugruppen auf.

Zum einen weist das Fahrzeug 2 eine in dem linken Außenrückspiegel 2.2 verbaute Kamerabeleuchtungsvorrichtung 2.2.2 auf, die der Kamera 2.2.1 zugeordnet ist, wobei der Wellenlängenbereich des von der Kamerabeleuchtungsvorrichtung 2.2.2 emittierten Lichts auf den Wellenlängenbereich der Kamera 2.2.1 abgestimmt ausgebildet ist und die Kamerabeleuchtungsvorrichtung 2.2.2 in Abhängigkeit eines Betriebszustands der Kamera 2.2.1 mittels der Steuerung 2.3 zur Emittierung von Licht ansteuerbar ist. Bei dem vorliegenden Ausführungsbeispiel umfasst die Kamerabeleuchtungsvorrichtung 2.2.2 sowohl eine Lichtquelle zur Emittierung von elektromagnetischer Strahlung im Wellenlängenbereich von sichtbarem Licht wie auch eine Lichtquelle zur Emittierung von elektromagnetischer Strahlung im Nahinfrarotbereich. Ferner ist die Kamerabeleuchtungsvorrichtung 2.2.2 dazu ausgebildet und eingerichtet, um die Umgebung des Fahrzeugs 2 in dem Bereich des linken Außenrückspiegels 2.2 mittels der Lichtquelle zur Emittierung von elektromagnetischer Strahlung im Wellenlängenbereich von sichtbarem Licht zu beleuchten, nämlich wenn der Benutzer das Fahrzeug 2 verlässt und wenn der Benutzer sich dem Fahrzeug 2 nähert, was nachfolgend noch erläutert wird.

Zwecks Erfassung des menschlichen Pulses ist mittels der Kamerabeleuchtungsvorrichtung 2.2.2 Licht in einem zu Infrarotstrahlung korrespondierenden Wellenlängenbereich emittierbar.

Zum anderen ist die Kamerabeleuchtungsvorrichtung 2.2.2 gleichzeitig als eine Positionierhilfevorrichtung 2.2.2 zur Positionierung des Körperteils 4 des Benutzers zwecks dessen bildlicher Erfassung mittels der Kamera 2.2.1 ausgebildet und eingerichtet, wobei die Positionierhilfevorrichtung 2.2.2 in Abhängigkeit eines Betriebszustands der Kamera 2.2.1 mittels der Steuerung 2.3 zur Abgabe eines von dem Benutzer optisch wahrnehmbaren Positionierhilfesignals ansteuerbar ist.

Ferner ist die Kamerabeleuchtungsvorrichtung 2.2.2 als eine Quittierungsvorrichtung 2.2.2 zur Quittierung der bildlichen Erfassung des Körperteils 4 des Benutzers mittels der Kamera 2.2.1 ausgebildet und eingerichtet, wobei die Quittierungsvorrichtung 2.2.2 in Abhängigkeit einer ordnungsgemäßen bildlichen Erfassung des Körperteils 4 des Benutzers mittels der Steuerung 2.3 zur Abgabe eines von dem Benutzer optisch wahrnehmbaren Quittierungssignals ansteuerbar ist.

Im Nachfolgenden werden das erfindungsgemäße Fahrzeug sowie das erfindungsgemäße Verfahren gemäß dem vorliegenden Ausführungsbeispiel anhand der Fig. 1 näher erläutert.

Der Benutzer, beispielsweise der Fahrzeugführer, verlässt das Fahrzeug 2. Mit dem Schließen der Fahrertür 2.4 und dem Entfernen des Benutzers wird das Fahrzeug 2 bei dem vorliegenden Ausführungsbeispiel automatisch verriegelt. Das Zugangssystem 2.1 des Fahrzeugs 2 verriegelt entsprechend alle fünf Türen 2.4 des Fahrzeugs 2. Bei unzureichender Helligkeit kann es vorgesehen sein, dass das Aussteigen und das Verlassen des Fahrzeugs 2 durch den Benutzer durch die Kamerabeleuchtungsvorrichtung 2.2.2 auf die oben bereits erläuterte Weise unterstützt wird. Ein Weg, den der Benutzer dabei zurücklegt, ist in der Fig. 1 durch Punkte 8 und Pfeile 10 symbolisiert. Die Punkte 8 symbolisieren dabei bestimmte Positionen des Benutzers auf diesem Weg, während die Pfeile 10 jeweils die Richtung der Bewegung des Benutzers auf diesem Weg darstellen.

Der Benutzer kehrt zu dem Fahrzeug 2 zurück und erreicht die in Fig. 1 mittels der linken Hand 4 des Benutzers symbolisch angedeutete Position. Diese Position ist in Fig. 1 der Übersichtlichkeit wegen etwas beabstandet von dem Fahrzeug 2 dargestellt. Praktisch verläuft die Annäherung an das Fahrzeug 2 jedoch wie folgt:

Der Benutzer erreicht das Fahrzeug 2 und ergreift zum Öffnen der Fahrertür 2.4 den Türgriff 2.4.1 der Fahrertür 2.4. Dies wird mittels des in dem Türgriff 2.4.1 der Fahrertür 2.4 eingebauten Näherungssensors zur Detektion einer Annäherung des Benutzers an die Kamera 2.2.1 detektiert und als das Auslösesignal an die Steuerung 2.3 übertragen. Damit liegt das Auslösesignal an der Steuerung 2.3 an und die Steuerung 2.3 steuert die Kamera 2.2.1 zur bildlichen Erfassung der linken Hand 4 des Benutzers an. Die Kamera 2.2.1 wird hierzu mittels der Steuerung 2.3 von einem ausgeschalteten Zustand in einen Betriebszustand überführt.

Damit der Benutzer dessen linke Hand 4 in korrekter Weise in dem Erfassungsbereich der Kamera 2.2.1 positioniert, steuert die Steuerung 2.3 vorab die als Positionierhilfevorrichtung zur Positionierung des Körperteils 4 des Benutzers zwecks dessen bildlicher Erfassung mittels der Kamera 2.2.1 ausgebildete Kamerabeleuchtungsvorrichtung 2.2.2 derart an, dass die Lichtquelle der Kamerabeleuchtungsvorrichtung 2.2.2 zur Emission von elektromagnetischer Strahlung im Wellenlängenbereich von sichtbarem Licht eingeschaltet wird, um so den Erfassungsbereich der Kamera 2.2.1 in dem Umfeld des Fahrzeugs 2 für den Benutzer durch ein optisch wahrnehmbares Positionierhilfesignal auszuleuchten. Beispielsweise könnte es sich bei dem als Positionierhilfesignal ausgebildeten emittierten Licht um ein dauerhaftes Licht mit der Farbe Weiß handeln. Auf diese Weise wäre gleichzeitig die Qualität der bildlichen Erfassung der linken Hand 4 des Benutzers und damit die Qualität der Auswertung der dazu korrespondierenden Ausgangssignale der Kamera 2.2.1, die zur Auswertung an die Steuerung 2.3 weitergeleitet werden, erhöht. Gleichzeitig signalisiert das Positionierhilfesignal dem Benutzer den Betriebszustand der Kamera 2.2.1; der Benutzer wird also durch das Positionierhilfesignal gleichzeitig dazu aufgefordert, dessen linke Hand 4 gemäß dem Positionierhilfesignal zu positionieren.

Der Benutzer positioniert dessen linke Hand 4 entsprechend dem Positionierhilfesignal in dem Erfassungsbereich der Kamera 2.2.1 und die Kamera 2.2.1 erfasst die linke Hand 4 des Benutzers bildlich. Die zu dem Bild korrespondierenden Ausgangsignale werden von der Kamera 2.2.1 zwecks Auswertung an die Steuerung 2.3 übermittelt. Damit der Benutzer darüber informiert ist, dass dessen linke Hand 4 mittels der Kamera 2.2.1 ordnungsgemäß, also in für eine Auswertung in der Steuerung 2.3 ausreichender Qualität, bildlich erfasst worden ist, steuert die Steuerung 2.3 die als Quittierungsvorrichtung zur Quittierung der bildlichen Erfassung des Körperteils 4 des Benutzers mittels der Kamera 2.2.1 ausgebildete Kamerabeleuchtungsvorrichtung 2.2.2 derart an, dass die Steuerung 2.3 die Kamerabeleuchtungsvorrichtung 2.2.2 in Abhängigkeit einer ordnungsgemäßen bildlichen Erfassung des Körperteils 4 des Benutzers mittels der Kamera 2.2.1 derart ansteuert, dass die Lichtquelle der Kamerabeleuchtungsvorrichtung 2.2.2 zur Emission von elektromagnetischer Strahlung im Wellenlängenbereich von sichtbarem Licht in einer vorher festgelegten und in der Steuerung 2.3 abgespeicherten Weise eingeschaltet wird, um so den Benutzer durch ein für den Benutzer optisch wahrnehmbares Quittierungssignal über die ordnungsgemäße bildliche Erfassung von dessen linker Hand 4 zu informieren. Bei dem Quittierungssignal könnte es sich beispielsweise um ein vorher festgelegtes und in der Steuerung 2.3 abgespeichertes Blinksignal handeln. Denkbar ist jedoch auch, dass bei einer zur Emission von farbigem Licht ausgebildeten und eingerichteten Kamerabeleuchtungsvorrichtung 2.2.2 diese derart angesteuert wird, dass sichtbares Licht einer bestimmten Farbe, beispielsweise der Farbe Grün, emittiert wird. Entsprechend könnte bei einer fehlerhaften bildlichen Erfassung des Körperteils 4 des Benutzers ein sichtbares Licht einer davon abweichenden Farbe, beispielsweise der Farbe Rot, emittiert werden.

Die Ausgangssignale der Kamera 2.2.1 werden in der Steuerung 2.3 auf dem Fachmann bekannte Weise ausgewertet. Beispielsweise werden die zu dem Bild korrespondierenden Ausgangssignale mit in der Steuerung 2.3 vorab abgespeicherten Daten verglichen, die zu einem zum Zugang zu dem Fahrzeug 2 berechtigten Benutzern korrespondieren. Stimmen die an der Steuerung 2.3 anliegenden Ausgangssignale der Kamera 2.2.1 mit den Daten zu einem zum Zugang zu dem Fahrzeug 2 berechtigten Benutzer in einer vorher festgelegten Weise überein, so steuert die Steuerung 2.3 das Zugangssystem 2.1 derart an, dass alle fünf Türen 2.4 des Fahrzeugs 2 entriegelt werden. Beispielsweise kann es vorgesehen sein, dass keine 100%-ige Übereinstimmung der Ausgangssignale mit den zu einem Benutzer abgespeicherten Daten übereinstimmen müssen. Auf diese Weise ist es möglich, gewisse Toleranzen bei dem erfindungsgemäßen Fahrzeug und dem erfindungsgemäßen Verfahren auszugleichen.

Bei den zu dem Bild korrespondierenden Ausgangssignalen der Kamera 2.2.1 und den vorab abgespeicherten Daten der Steuerung 2.3 handelt es sich bei dem vorliegenden Ausführungsbeispiel um mindestens ein biometrisches Merkmal der Hand 4 des Benutzers. Mittels der biometrischen Vermessung der Hand 4 des Benutzers ist eine sichere Identifizierung des Benutzers gewährleistet und damit ein ungewünschter Zugang eines Unbefugten zu dem Fahrzeug wirksam verhindert. Wie bereits oben erläutert kann es sich bei dem mindestens einen biometrischen Merkmal der Hand 4 beispielsweise um die Textur der Haut, den Verlauf der Lebenslinien oder auch Narben und Falten handeln. Durch die Ausbildung mindestens eines biometrischen Merkmals als biometrisches Merkmal für die Lebenderkennung ist ein ungewünschter Zutritt von Unbefugten auf das Fahrzeug 2, beispielsweise mittels in das Fahrzeug 2 eingespeister zweidimensionaler Bilder, wirksam verhindert.

Wie oben bereits erläutert, ist mindestens eines des mindestens einen biometrischen Merkmals des Körperteils 4, also der Hand 4, als ein biometrisches Merkmal für die Lebenderkennung, nämlich als ein menschlicher Puls, ausgebildet. Zwecks Erfassung des menschlichen Pulses wurde bei der bildlichen Erfassung der Hand 4 mittels der Kamerabeleuchtungsvorrichtung 2.2.2 Licht in einem zu Infrarotstrahlung korrespondierenden Wellenlängenbereich auf die Hand 4 abgestrahlt, mittels dem der menschliche Puls des Benutzers, also dessen Pulsschlag, ermittelt worden ist. Die Ausbildung des mindestens einen biometrischen Merkmals als ein biometrisches Merkmal für die Lebenderkennung bietet somit einen wirkungsvollen Schutz vor dem Zugang von Unbefugten zu dem Fahrzeug 2.

Ferner sind die Kamera 2.2.1 und die Steuerung 2.3 dazu ausgebildet und eingerichtet, in der Kamera 2.2.1 und in der Steuerung 2.3 eine gemeinsame Signatur zu erzeugen und/oder abzuspeichern, wobei die gemeinsame Signatur mittels der Kamera 2.2.1 in ein aufgenommenes Bild eintragbar ist und dieses aufgenommene Bild mit der gemeinsamen Signatur anhand der gemeinsamen Signatur mittels der Steuerung 2.3 als ein mit der Kamera 2.2.1 aufgenommenes Bild identifizierbar ist. Auf diese Weise ist die Sicherheit gegen eine unbefugte Ausführung der Fahrzeugfunktion weiter verbessert. Bei der gemeinsamen Signatur kann es sich beispielsweise um einen zwischen der Kamera 2.2.1 und der Steuerung 2.3 synchronisierten Zeitstempel oder um mindestens einen zwischen der Kamera 2.2.1 und der Steuerung 2.3 synchronisierten Lichtblitz handeln. Entsprechendes gilt für das erfindungsgemäße Verfahren, wonach in der Kamera 2.2.1 und in der Steuerung 2.3 eine gemeinsame Signatur erzeugt und/oder abgespeichert ist und die Kamera 2.2.1 die gemeinsame Signatur in ein mittels der Kamera 2.2.1 aufgenommenes Bild einträgt, wobei dieses aufgenommene Bild mit der gemeinsamen Signatur anhand der gemeinsamen Signatur mittels der Steuerung 2.3 als ein mit der Kamera 2.2.1 aufgenommenes Bild identifiziert wird.

Der Benutzer kann nun die Fahrertür 2.4 des Fahrzeugs 2 durch Ziehen an dem Türgriff 2.4.1 der Fahrertür 2.4 öffnen und in das Fahrzeug 2 einsteigen.

Die Erfindung ist nicht auf das vorliegende Ausführungsbeispiel des erfindungsgemäßen Fahrzeugs und des erfindungsgemäßen Verfahrens begrenzt. Beispielsweise muss es sich bei dem Fahrzeug nicht zwingend um ein als Personenkraftwagen ausgebildetes Kraftfahrzeug handeln.

Anstelle einer Kamera ist auch eine Mehrzahl von Kameras denkbar, die auf erfindungsgemäße Weise zusammenwirken. Beispielsweise könnte vorgesehen sein, dass eine von mindestens zwei Kameras zur bildlichen Erfassung des Körperteils des Benutzers in einem ersten Wellenlängenbereich, insbesondere in einem zu sichtbarem Licht korrespondierenden ersten Wellenlängenbereich, und die andere der mindestens zwei Kameras zur bildlichen Erfassung des Körperteils des Benutzers in einem von dem ersten Wellenlängenbereich verschiedenen zweiten Wellenlängenbereich, insbesondere in einem zu Infrarotstrahlung korrespondierenden zweiten Wellenlängenbereich, ausgebildet und eingerichtet sind und die Steuerung zur Auswertung von dazu korrespondierenden Ausgangssignalen der mindestens zwei Kameras ausgebildet und eingerichtet ist.

Auch wäre es möglich, dass mehrere Kameras an verschiedenen Seiten des Fahrzeugs angeordnet sind, um so beispielsweise eine Entriegelung der Fahrzeugtüren von verschiedenen Seiten des Fahrzeugs zu ermöglichen.

Eine Kamerabeleuchtungsvorrichtung ist ebenfalls nicht zwingend erforderlich. Darüber hinaus kann die Positionierhilfevorrichtung und/oder die Quittierungsvorrichtung auch als jeweils separate Baueinheit ausgebildet sein. Entsprechend wäre es möglich, die Positionierhilfevorrichtung und/oder die Quittierungsvorrichtung zum einen räumlich getrennt von der Kamerabeleuchtungsvorrichtung an dem Fahrzeug zu positionieren. Zum anderen ist es dadurch möglich, die Positionierhilfevorrichtung und/oder die Quittierungsvorrichtung anders als die Kamerabeleuchtungsvorrichtung auszubilden. Beispielsweise könnten die Positionierhilfevorrichtung und/oder die Quittierungsvorrichtung zur Ausgabe eines akustischen oder eines akustischen und optischen Signals ausgebildet und eingerichtet sein.

Die mindestens eine Kamera muss nicht zwingend an einem Außenrückspiegel angeordnet sein. Beispielsweise ist es denkbar, dass die mindestens eine Kamera alternativ oder zusätzlich an einem Innenrückspiegel des Fahrzeugs angeordnet ist. Eine Anordnung der Kamera an dem Innenrückspiegel bietet sich beispielsweise an, wenn eine als Starteinheit zum Starten des Antriebs des Fahrzeugs ausgebildete Fahrzeugkomponente mittels der Kamera zur bildlichen Erfassung eines Körperteils eines Benutzers des Fahrzeugs freigegeben werden soll. Insbesondere kann eine derartige Kamera gleichzeitig zur Benutzerzustandsbeobachtung als weitere Fahrzeugfunktion ausgebildet und eingerichtet und die Steuerung zur Auswertung von dazu korrespondierenden Ausgangssignalen dieser Kamera ausgebildet und eingerichtet sein. Denkbar ist jedoch auch eine Kombination der vorgenannten Ausführungsformen mit der anhand des Ausführungsbeispiels erläuterten Ausführungsform.

Eine vorteilhafte Anwendung der Erfindung ist jedoch nicht auf ein Zugangssystem und/oder eine Starteinheit für ein Fahrzeug beschränkt. Auch andere Fahrzeugkomponenten und damit auch andere Fahrzeugfunktionen können alternativ oder zusätzlich in weiteren Ausführungsformen der Erfindung berücksichtigt werden.

Eine andere vorteilhafte Weiterbildung des erfindungsgemäßen Fahrzeugs sieht vor, dass eine der mindestens einen Kamera als eine Kamera zur Benutzerzustandsbeobachtung ausgebildet und eingerichtet ist und die Steuerung zur Auswertung von dazu korrespondierenden Ausgangssignalen der mindestens einen Kamera ausgebildet und eingerichtet ist. Beispielsweise kann als weitere Fahrzeugfunktion mittels der Benutzerzustandsbeobachtung der Aufmerksamkeitsgrad des Benutzers, beispielsweise des Fahrzeugführers des Fahrzeugs, auf dem Fachmann bekannte Weise kontrolliert werden. Dies ist jedoch rein exemplarisch. Die Benutzerzustandsbeobachtung kann alternativ oder zusätzlich zur weiteren Fahrzeugfunktion auch für die Fahrzeugfunktion verwendet werden. Beispielsweise könnte Müdigkeit, der Einfluss von Drogen oder Alkohol, oder eine sonstige psychische oder physische Störung dazu führen, dass der Benutzer nicht mehr in der Lage ist, das Fahrzeug im Verkehr zu führen. Entsprechend könnte auf Basis der Benutzerzustandsbeobachtung, beispielsweise der Beobachtung des Lidschlags der Augen, die Ausführung der Fahrzeugfunktion, beispielsweise eines Starts des Antriebsmotors des Fahrzeugs, gesperrt sein.

Alternativ oder zusätzlich zu der Ausbildung mindestens eines biometrischen Merkmals für die Lebenderkennung als menschlicher Puls ist es denkbar, dass mindestens eines des mindestens einen biometrischen Merkmals als ein dreidimensionaler Verlauf einer äußeren oder einer inneren Oberfläche des Körperteils ausgebildet ist, wobei mittels der Kamerabeleuchtungsvorrichtung Licht mit einem vorher festgelegten Muster auf das Körperteil projezierbar ist. Hierdurch ist alternativ oder zusätzlich zu der Erfassung des menschlichen Pulses für die Lebenderkennung ein Schutz vor einer unbefugten Ausführung der Fahrzeugfunktion mittels eines in das Fahrzeug eingespeisten zweidimensionalen Bildes auf technisch einfache Weise realisiert. Das Licht mit dem vorher festgelegten Muster kann sowohl in einem zu sichtbaren Licht korrespondierenden Wellenlängenbereich, nämlich zur Erfassung eines Verlaufs einer äußeren Oberfläche des Körperteils, wie auch in einem zu Infrarotstrahlung korrespondierenden Wellenlängenbereich, nämlich zur Erfassung eines Verlaufs einer inneren Oberfläche des Körperteils, emittiert werden. Eine äußere Oberfläche kann beispielsweise die Hautoberfläche der Hand des Benutzers sein; eine innere Oberfläche kann beispielsweise die Oberfläche von in der Hand des Benutzers verlaufenden Adern oder dergleichen sein. Das Licht kann beispielsweise als ein Streifenlichtmuster ausgebildet sein. Jedoch sind auch andere Muster möglich. Rein exemplarisch sei hier auf Punktmuster verwiesen. Aufgrund der Dreidimensionalität eines Verlaufs einer äußeren oder einer inneren Oberfläche des Körperteils ist eine ungewünschte Manipulation mittels eines zweidimensionalen Bildes wirksam unterbunden.

Eine andere Weiterbildung des erfindungsgemäßen Verfahrens sieht vor, dass die Kamera zur bildlichen Erfassung und die Steuerung zur Auswertung von einer Bewegung des Körperteils ausgebildet und eingerichtet sind. Hierdurch ist die Sicherheit gegen eine unbefugte Ausführung der Fahrzeugfunktion auf technisch besonders einfache Weise zusätzlich verbessert. Entsprechendes gilt für eine dazu korrespondierende Weiterbildung des erfindungsgemäßen Verfahrens, wonach eine Bewegung des Körperteils mittels der Kamera bildlich erfasst und mittels der Steuerung ausgewertet wird.

Alternativ oder zusätzlich zu der Positionierhilfevorrichtung und der Quittierungsvorrichtung bei dem oben erläuterten Ausführungsbeispiel ist es möglich, dass die Kamera in Abhängigkeit des Auslösesignals mittels einer Kameraantriebsvorrichtung automatisch von einer zur Durchführung der weiteren Fahrzeugfunktion optimierten ersten Kameraausrichtung in eine zur Ausführung der Fahrzeugfunktion optimierten zweiten Kameraausrichtung überführbar ist. Auf diese Weise ist es möglich, die Kamera zum einen optimal für die Durchführung der weiteren Fahrzeugfunktion und zum anderen optimal für die Ausführung der Fahrzeugfunktion auszurichten. Qualitätseinbußen durch einen Kompromiss bei der Ausrichtung der Kamera sind dadurch wirksam verhindert. Entsprechendes gilt für eine dazu korrespondierende Weiterbildung des erfindungsgemäßen Verfahrens, wonach die Kamera in Abhängigkeit des Auslösesignals mittels einer Kameraantriebsvorrichtung automatisch von einer zur Durchführung der weiteren Fahrzeugfunktion optimierten ersten Kameraausrichtung in eine zur Ausführung der Fahrzeugfunktion optimierten zweiten Kameraausrichtung überführt wird.

Beispielsweise ist es denkbar, dass die erste Kameraausrichtung und die zweite Kameraausrichtung vorher festgelegt und in der Steuerung zur Ansteuerung der Kameraantriebsvorrichtung abgespeichert sind. Hierdurch ist die automatische Kameraausrichtung auf technisch sehr einfache Weise realisiert. Alternativ dazu ist es jedoch auch möglich, dass die erste Kameraausrichtung vorher festgelegt und in der Steuerung zur Ansteuerung der Kameraantriebsvorrichtung abgespeichert ist und die zweite Kameraausrichtung zur Ausführung der Fahrzeugfunktion in Abhängigkeit der mittels der Kamera erfassten Bilder des Körperteils mittels der Kameraantriebsvorrichtung automatisch einstellbar ist. Auf diese Weise ist die zweite Kameraausrichtung zur Ausführung der Fahrzeugfunktion variabler ausgebildet, so dass die Qualität bei der bildlichen Erfassung des Körperteils verbessert ist. Entsprechendes gilt für die dazu korrespondierende Weiterbildung des erfindungsgemäßen Verfahrens, wonach die erste Kameraausrichtung vorher festgelegt und in der Steuerung zur Ansteuerung der Kameraantriebsvorrichtung abgespeichert ist und die zweite Kameraausrichtung zur Ausführung der Fahrzeugfunktion in Abhängigkeit der mittels der Kamera erfassten Bilder des Körperteils mittels der Kameraantriebsvorrichtung automatisch eingestellt wird.

Darüber hinaus sind Ausführungsformen der Erfindung möglich, bei denen die Fahrzeugkomponente zusätzlich mittels einer tragbaren Fernbedienung zur Ausführung der Fahrzeugfunktion ansteuerbar ist, wobei die Fernbedienung in Abhängigkeit einer Ansteuerung der Fahrzeugkomponente mittels der Kamera zwischen einem Aktivierungszustand, in dem die Fahrzeugkomponente mittels der Fernbedienung ansteuerbar ist, und einem Deaktivierungszustand, in dem die Fahrzeugkomponente mittels der Fernbedienung nicht ansteuerbar ist, automatisch hin und her überführbar ist. Entsprechend sieht eine dazu korrespondierende Weiterbildung des erfindungsgemäßen Verfahrens vor, dass die Fahrzeugkomponente zusätzlich mittels einer tragbaren Fernbedienung zur Ausführung der Fahrzeugfunktion ansteuerbar ist, wobei die Fernbedienung in Abhängigkeit einer Ansteuerung der Fahrzeugkomponente mittels der Kamera zwischen einem Aktivierungszustand, in dem die Fahrzeugkomponente mittels der Fernbedienung ansteuerbar ist, und einem Deaktivierungszustand, in dem die Fahrzeugkomponente mittels der Fernbedienung nicht ansteuerbar ist, automatisch hin und her überführt wird. Hierdurch ist es möglich, die Fahrzeugkomponente zur Ausführung der Fahrzeugfunktion grundsätzlich einerseits mittels einer an sich bekannten Fernbedienung und andererseits in Abhängigkeit der bildlichen Erfassung des Körperteils zu bedienen. Beispielsweise ist es gemäß dieser Weiterbildung möglich, bei einem Ausflug an einen Badesee die Fernbedienung im Fahrzeug zurückzulassen. Eine Zentralverriegelung des Fahrzeugs, also ein Zugangssystem des Fahrzeugs, könnte mittels der bildlichen Erfassung beim Verlassen des Fahrzeugs zum einen verriegelt werden. Zum anderen könnte dabei auch die in dem Fahrzeug verbleibende Fernbedienung automatisch in deren Deaktivierungszustand überführt werden. Das Fahrzeug könnte also mittels der Fernbedienung nicht bedient und damit weder geöffnet noch gestartet werden. Kehrt der Benutzer von dem Badesee zurück zu dem Fahrzeug, kann er die Zentralverriegelung mittels der bildlichen Erfassung wieder entriegeln und dabei gleichzeitig die Fernbedienung in deren Aktivierungszustand überführen. Entsprechend könnte das Fahrzeug danach mittels der Fernbedienung auf gewohnte Weise verriegelt, entriegelt und/oder gestartet werden.

Mit der Erfindung ist somit ein schlüsselloser Zugang zu einem Fahrzeug auf konstruktiv und schaltungstechnisch einfache Weise realisierbar. Gleiches gilt für andere Fahrzeugkomponenten und dazu korrespondierende Fahrzeugfunktionen. Darüber hinaus werden Kosten reduziert und Bauraum eingespart. Die weitgehende Mehrfachnutzung der erfindungsgemäßen Komponenten, wie beispielsweise der Kamera und der Steuerung, ist hierfür entscheidend. Eine konsequente Mehrfachnutzung der übrigen Komponenten, wie anhand des Ausführungsbeispiels exemplarisch erläutert, verstärkt die Vorteile der Erfindung zusätzlich.

### Bezugszeichenliste

- 2: Fahrzeug, als Personenkraftwagen ausgebildet
- 2.1: Fahrzeugkomponente, als Zugangssystem ausgebildet
- 2.2: Außenrückspiegel
- 2.2.1: Kamera
- 2.2.2: Kamerabeleuchtungsvorrichtung
- 2.3: Steuerung
- 2.4: Tür
- 2.4.1: Türgriff
- 4: Körperteil des Benutzers, als linke Hand ausgebildet
- 8: Positionen des Benutzers nach dem Verlassen des Fahrzeugs 2
- 10: Bewegungsrichtungen des Benutzers nach dem Verlassen des Fahrzeugs 2

## Patentansprüche

1. Fahrzeug (2), umfassend eine Fahrzeugkomponente (2.1) zur Ausführung einer Fahrzeugfunktion, mindestens eine Kamera (2.2.1) zur bildlichen Erfassung eines Körperteils (4) eines Benutzers des Fahrzeugs (2) und eine Steuerung (2.3) zur Ansteuerung der Kamera (2.2.1), zur Auswertung von Ausgangssignalen der Kamera (2.2.1) und zur Ansteuerung der Fahrzeugkomponente (2.1), wobei die Fahrzeugkomponente (2.1) und die Kamera (2.2.1) mit der Steuerung (2.3) signalübertragend verbunden sind und die Fahrzeugkomponente (2.1) in Abhängigkeit der Auswertung der zu der bildlichen Erfassung des Körperteils (4) mittels der Kamera (2.2.1) korrespondierenden Ausgangssignale mittels der Steuerung (2.3) zur Ausführung der Fahrzeugfunktion ansteuerbar ist, und wobei die Kamera (2.2.1) und die Steuerung (2.3) zur Durchführung einer weiteren Fahrzeugfunktion ausgebildet und eingerichtet sind und die Kamera (2.2.1) in Abhängigkeit eines an der Steuerung (2.3) anliegenden Auslösesignals mittels der Steuerung (2.3) zur Ausführung der bildlichen Erfassung des Körperteils (4) des Benutzers ansteuerbar ist,
**dadurch gekennzeichnet,**
**dass** die Kamera und die Steuerung dazu ausgebildet und eingerichtet sind, in der Kamera und in der Steuerung eine gemeinsame Signatur zu erzeugen und/oder abzuspeichern, wobei die gemeinsame Signatur mittels der Kamera in ein aufgenommenes Bild eintragbar ist und dieses aufgenommene Bild mit der gemeinsamen Signatur anhand der gemeinsamen Signatur mittels der Steuerung als ein mit der Kamera aufgenommenes Bild identifizierbar ist.

2. Fahrzeug (2) nach Anspruch 1,
**dadurch gekennzeichnet,**
**dass** das Fahrzeug (2) eine Quittierungsvorrichtung (2.2.2) zur Quittierung der bildlichen Erfassung des Körperteils (4) des Benutzers mittels mindestens einer der mindestens einen Kamera (2.2.1) aufweist, wobei die Quittierungsvorrichtung (2.2.2) in Abhängigkeit einer ordnungsgemäßen bildlichen Erfassung des Körperteils (4) des Benutzers mittels der Steuerung (2.3) zur Abgabe eines von dem Benutzer optisch und/oder akustisch wahrnehmbaren Quittierungssignals ansteuerbar ist.

3. Fahrzeug (2) nach Anspruch 1 oder 2,
**dadurch gekennzeichnet,**
**dass** mindestens eine der mindestens einen Kamera (2.2.1) an einem Außenrückspiegel (2.2) und/oder an einem Innenrückspiegel des Fahrzeugs (2) angeordnet sind/ist.

4. Fahrzeug (2) nach einem der Ansprüche 1 bis 3,
**dadurch gekennzeichnet,**
**dass** eine der mindestens einen Kamera (2.2.1) als eine Kamera (2.2.1) mit einem Weitwinkelobjektiv, bevorzugt als eine Kamera (2.2.1) mit einem Fischaugenobjektiv, besonders bevorzugt als eine Kamera (2.2.1) mit einem Sichtfeld von größer oder gleich 180°, ausgebildet ist und die Steuerung (2.3) zur Auswertung von dazu korrespondierenden Ausgangssignalen der mindestens einen Kamera (2.2.1) ausgebildet und eingerichtet ist.

5. Fahrzeug (2) nach einem der Ansprüche 1 bis 4,
**dadurch gekennzeichnet,**
**dass** die Kamera (2.2.1) zur bildlichen Erfassung von mindestens einem biometrischen Merkmal des Körperteils (4) und die Steuerung (2.3) zur Auswertung von zu diesem biometrischen Merkmal des Körperteils (4) korrespondierenden Ausgangssignalen der Kamera (2.2.1) ausgebildet und eingerichtet sind, wobei mindestens eines des mindestens einen biometrischen Merkmals des Körperteils (4) als ein biometrisches Merkmal für die Lebenderkennung ausgebildet ist.

6. Fahrzeug nach Anspruch 5,
**dadurch gekennzeichnet,**
**dass** mindestens einer der mindestens einen Kamera (2.2.1) eine Kamerabeleuchtungsvorrichtung (2.2.2) des Fahrzeugs (2) zugeordnet ist, wobei der Wellenlängenbereich des von der Kamerabeleuchtungsvorrichtung (2.2.2) emittierten Lichts auf den Wellenlängenbereich der dazu korrespondierenden Kamera (2.2.1) abgestimmt ausgebildet ist und die Kamerabeleuchtungsvorrichtung (2.2.2) in Abhängigkeit eines Betriebszustands der Kamera (2.2.1) mittels der Steuerung (2.3) zur Emittierung von Licht ansteuerbar ist, und wobei mindestens eines des mindestens einen biometrischen Merkmals als ein dreidimensionaler Verlauf einer äußeren oder einer inneren Oberfläche des Körperteils ausgebildet ist und mittels der Kamerabeleuchtungsvorrichtung Licht mit einem vorher festgelegten Muster auf das Körperteil projezierbar ist.

7. Fahrzeug nach einem der Ansprüche 1 bis 6,
**dadurch gekennzeichnet,**
**dass** die Fahrzeugkomponente zusätzlich mittels einer tragbaren Fernbedienung zur Ausführung der Fahrzeugfunktion ansteuerbar ist, wobei die Fernbedienung in Abhängigkeit einer Ansteuerung der Fahrzeugkomponente mittels der Kamera zwischen einem Aktivierungszustand, in dem die Fahrzeugkomponente mittels der Fernbedienung ansteuerbar ist, und einem Deaktivierungszustand, in dem die Fahrzeugkomponente mittels der Fernbedienung nicht ansteuerbar ist, automatisch hin und her überführbar ist.

8. Verfahren für den Betrieb eines Fahrzeugs (2) nach einem der Ansprüche 1 bis 7, umfassend eine Fahrzeugkomponente (2.1) zur Ausführung einer Fahrzeugfunktion, mindestens eine Kamera (2.2.1) zur bildlichen Erfassung eines Körperteils (4) eines Benutzers des Fahrzeugs (2) und eine Steuerung (2.3) zur Ansteuerung der Kamera (2.2.1), zur Auswertung von Ausgangssignalen der Kamera (2.2.1) und zur Ansteuerung der Fahrzeugkomponente (2.1), wobei die Fahrzeugkomponente (2.1) und die Kamera (2.2.1) mit der Steuerung (2.3) signalübertragend verbunden sind und die Steuerung (2.3) die Fahrzeugkomponente (2.1) in Abhängigkeit der Auswertung der zu der bildlichen Erfassung des Körperteils (4) mittels der Kamera (2.2.1) korrespondierenden Ausgangssignale zur Ausführung der Fahrzeugfunktion ansteuert, und wobei die Kamera (2.2.1) und die Steuerung (2.3) zur Durchführung einer weiteren Fahrzeugfunktion ausgebildet und eingerichtet sind und die Steuerung (2.3) die Kamera (2.2.1) in Abhängigkeit eines an der Steuerung (2.3) anliegenden Auslösesignals zur Ausführung der bildlichen Erfassung des Körperteils (4) des Benutzers ansteuert,
**dadurch gekennzeichnet,**
**dass** in der Kamera und in der Steuerung eine gemeinsame Signatur erzeugt und/oder abgespeichert ist und die Kamera die gemeinsame Signatur in ein mittels der Kamera aufgenommenes Bild einträgt, wobei dieses aufgenommene Bild mit der gemeinsamen Signatur anhand der gemeinsamen Signatur mittels der Steuerung als ein mit der Kamera aufgenommenes Bild identifiziert wird.

9. Verfahren nach Anspruch 8,
**dadurch gekennzeichnet,**
**dass** das Fahrzeug (2) eine Quittierungsvorrichtung (2.2.2) zur Quittierung der bildlichen Erfassung des Körperteils (4) des Benutzers mittels mindestens einer der mindestens einen Kamera (2.2.1) aufweist, wobei die Steuerung (2.3) die Quittierungsvorrichtung (2.2.2) in Abhängigkeit einer ordnungsgemäßen bildlichen Erfassung des Körperteils (4) des Benutzers mittels der Kamera (2.2.1) zur Abgabe eines von dem Benutzer optisch und/oder akustisch wahrnehmbaren Quittierungssignals ansteuert.

10. Verfahren nach Anspruch 8 oder 9,
**dadurch gekennzeichnet,**
**dass** mittels der Kamera (2.2.1) und der Steuerung (2.3) mindestens ein biometrisches Merkmal des Körperteils (4) bildlich erfasst und ausgewertet wird, wobei mindestens eines des mindestens einen biometrischen Merkmals des Körperteils (4) als ein biometrisches Merkmal für die Lebenderkennung ausgebildet ist.

11. Verfahren nach Anspruch 10,
**dadurch gekennzeichnet,**
**dass** mindestens einer der mindestens einen Kamera (2.2.1) eine Kamerabeleuchtungsvorrichtung (2.2.2) des Fahrzeugs (2) zugeordnet ist, wobei der Wellenlängenbereich des von der Kamerabeleuchtungsvorrichtung (2.2.2) emittierten Lichts auf den Wellenlängenbereich der dazu korrespondierenden Kamera (2.2.1) abgestimmt ausgebildet ist und die Steuerung (2.3) die Kamerabeleuchtungsvorrichtung (2.2.2) in Abhängigkeit eines Betriebszustands der Kamera (2.2.1) zur Emittierung von Licht ansteuert, und wobei mindestens eines des mindestens einen biometrischen Merkmals als ein dreidimensionaler Verlauf einer äußeren oder einer inneren Oberfläche des Körperteils ausgebildet ist, wobei mittels der Kamerabeleuchtungsvorrichtung Licht mit einem vorher festgelegten Muster auf das Körperteil projeziert wird.

12. Verfahren nach einem der Ansprüche 8 bis 11,
**dadurch gekennzeichnet,**
**dass** die Fahrzeugkomponente zusätzlich mittels einer tragbaren Fernbedienung zur Ausführung der Fahrzeugfunktion ansteuerbar ist, wobei die Fernbedienung in Abhängigkeit einer Ansteuerung der Fahrzeugkomponente mittels der Kamera zwischen einem Aktivierungszustand, in dem die Fahrzeugkomponente mittels der Fernbedienung ansteuerbar ist, und einem Deaktivierungszustand, in dem die Fahrzeugkomponente mittels der Fernbedienung nicht ansteuerbar ist, automatisch hin und her überführt wird.

## Claims

1. Vehicle (2) comprising a vehicle component (2.1) for executing a vehicle function, at least one camera (2.2.1) for detecting as an image a body part (4) of an operator of the vehicle (2) and a control unit (2.3) for actuating the camera (2.2.1), for evaluating output signals of the camera (2.2.1) and for actuating the vehicle component (2.1), where the vehicle component (2.1) and the camera (2.2.1) are linked to the control unit (2.3) to transfer signals and the vehicle component (2.1) can be actuated by the control unit (2.3) for performing the vehicle function depending on the evaluation of the output signals corresponding to the detection of the body part (4) as an image by means of the camera (2.2.1) and where the camera (2.2.1) and the control unit (2.3) are designed and set up to perform a further vehicle function and the camera (2.2.1) can be actuated by means of the control unit (2.3) to perform the detection of the body part (4) of the operator as an image depending on a triggering signal pending at the control unit (2.3),
**characterized in that**
the camera and the control unit are designed and set up to generate and/or store in the camera and in the control unit a shared signature, where the shared signature can be entered by means of the camera in an image taken and this taken image with the shared signature is identifiable by means of the control unit as an image taken by the camera on the basis of the shared signature.

2. Vehicle (2) in accordance with Claim 1,
**characterized in that**
the vehicle (2) features an acknowledgment device (2.2.2) for acknowledging the detection of a body part (4) of the operator as an image by means of at least one of the at least one cameras (2.2.1), where the acknowledgment device (2.2.2) can be actuated by the control unit (2.3) to issue an acknowledgment signal that can be perceived visually and/or acoustically by the operator depending on proper detection as an image of the body part (4) of the operator.

3. Vehicle (2) in accordance with Claim 1 or 2,
**characterized in that**
at least one of the at least one cameras (2.2.1) is/are arranged on an outside rear view mirror (2.2) and/or on an interior rear view mirror of the vehicle (2).

4. Vehicle (2) in accordance with one of Claims 1 through 3,
**characterized in that**
one of the at least one cameras (2.2.1) is designed as a camera (2.2.1) with a wide-angle lens, preferentially as a camera (2.2.1) with a fisheye lens, especially preferentially as a camera (2.2.1) with a field of vision of greater than or equal to 180°, and the control unit (2.3) is designed and set up to evaluate output signals of the at least one cameras (2.2.1) corresponding to the same.

5. Vehicle (2) in accordance with one of Claims 1 through 4,
**characterized in that**
the camera (2.2.1) is designed and set up to detect as an image at least one biometric feature of the body part (4) and the control unit (2.3) to evaluate output signals of the camera (2.2.1) corresponding to this biometric feature of the body part (4), where at least one of the at least one biometric features of the body part (4) takes the form of a biometric feature for liveness detection.

6. Vehicle in accordance with Claim 5,
**characterized in that**
a camera illumination device (2.2.2) of the vehicle (2) is allocated to at least one of the at least one cameras (2.2.1), where the wavelength range of the light emitted by the camera illumination device (2.2.2) is designed to be coordinated with the wavelength range of the corresponding camera (2.2.1) and the camera illumination device (2.2.2) can be actuated by means of the control unit (2.3) to emit light depending on an operating mode of the camera (2.2.1) and, where at least one of the at least one biometric feature takes the form of a three-dimensional course of an exterior or internal surface of the body part and light with a predetermined pattern can be projected onto the body part by means of the camera illumination device.

7. Vehicle in accordance with one of Claims 1 through 6,
**characterized in that**
the vehicle component can be additionally actuated by a portable remote control for performing the vehicle function, where the remote control can be automatically switched back and forth between an activated mode in which the vehicle component can be actuated by means of the remote control and a deactivated mode in which the vehicle component cannot be actuated by means of the remote control depending on actuation of the vehicle component by means of the camera.

8. Procedure for operating a vehicle (2) in accordance with one of Claims 1 through 7 comprising a vehicle component (2.1) for executing a vehicle function, at least one camera (2.2.1) for detecting as an image a body part (4) of an operator of the vehicle (2) and a control unit (2.3) for actuating the camera (2.2.1), for evaluating output signals of the camera (2.2.1) and for actuating the vehicle component (2.1), where the vehicle component (2.1) and the camera (2.2.1) are linked to the control unit (2.3) to transfer signals and the control unit (2.3) actuates the vehicle component (2.1) for performing the vehicle function depending on the evaluation of the output signals corresponding to the detection of the body part (4) as an image by means of the camera (2.2.1) and where the camera (2.2.1) and the control unit (2.3) are designed and set up to perform a further vehicle function and the control unit (2.3) actuates the camera (2.2.1) to perform the detection of the body part (4) of the operator as an image depending on a triggering signal pending at the control unit (2.3),
**characterized in that**
a shared signature is generated and/or stored in the camera and in the control unit and the camera enters the shared signature in an image taken by the camera, where this taken image with the shared signature is identified on the basis of the shared signature by means of the control unit as an image taken by the camera.

9. Procedure in accordance with Claim 8,
**characterized in that**
the vehicle (2) features an acknowledgment device (2.2.2) for acknowledging the detection of a body part (4) of the operator as an image by means of at least one of the at least one cameras (2.2.1), where the control unit (2.3) actuates the acknowledgment device (2.2.2) to issue an acknowledgment signal that can be perceived visually and/or acoustically by the operator depending on proper detection as an image of the body part (4) of the operator by means of the camera (2.2.1).

10. Procedure in accordance with Claim 8 or 9,
**characterized in that**
at least one biometric feature of the body part (4) is detected as an image and evaluated by means of the camera (2.2.1) and the control unit (2.3), where at least one of the at least one biometric features of the body part (4) takes the form of a biometric feature for liveliness detection.

11. Procedure in accordance with Claim 10,
**characterized in that**
a camera illumination device (2.2.2) of the vehicle (2) is allocated to at least one of the at least one cameras (2.2.1), where the wavelength range of the light emitted by the camera illumination device (2.2.2) is designed to be coordinated with the wavelength range of the corresponding camera (2.2.1) and control unit (2.3) actuates the camera illumination device (2.2.2) to emit light depending on an operating mode of the camera (2.2.1) and, where at least one of the at least one biometric features takes the form of a three-dimensional course of an exterior or internal surface of the body part, where light with a predetermined pattern is projected onto the body part by means of the camera illumination device.

12. Process in accordance with one of Claims 8 through 11,
**characterized in that**
the vehicle component can be additionally actuated by a portable remote control for performing the vehicle function, where the remote control is automatically switched back and forth between an activated mode in which the vehicle component can be actuated by means of the remote control and a deactivated mode in which the vehicle component cannot be actuated by means of the remote control depending on actuation of the vehicle component by means of the camera.

## Revendications

1. Véhicule (2), comprenant un composant véhicule (2.1) pour l'exécution d'une fonction du véhicule, au moins une caméra (2.2.1) pour la saisie d'images d'une partie du corps (4) d'un utilisateur du véhicule (2) et une commande (2.3) pour la commande de la caméra (2.2.1), pour l'évaluation des signaux de sortie de la caméra (2.2.1) et pour la commande du composant véhicule (2.1), le composant de véhicule (2.1) et la caméra (2.2.1) étant reliés à la commande (2.3) par la transmission de signaux et le composant véhicule (2.1) pouvant être commandé au moyen de la commande (2.3) pour l'exécution de la fonction du véhicule en fonction de l'évaluation des signaux de sortie correspondant à la saisie d'image de la partie du corps (4) au moyen de la caméra (2.2.1) et sachant que la caméra (2.2.1) et la commande (2.3) sont conçues et configurées pour l'exécution d'une autre fonction du véhicule et que la caméra (2.2.1) peut être commandée au moyen de la commande (2.3) en fonction d'un signal de déclenchement appliqué à la commande (2.3) pour l'exécution de la saisie d'image de la partie du corps (4) de l'utilisateur,
**caractérisé en ce que**
la caméra et la commande sont conçues et configurées de manière à générer et/ou mémoriser une signature commune dans la caméra et dans la commande, la signature commune pouvant être inscrite au moyen de la caméra sur une image prise et cette image prise avec signature commune pouvant être identifiée au moyen de la commande à l'aide de la signature commune comme une image prise avec cette caméra.

2. Véhicule (2) selon la revendication 1,
**caractérisé en ce que**
le véhicule (2) est doté d'un dispositif d'acquittement (2.2.2) pour l'acquittement de la saisie d'image de la partie du corps (4) de l'utilisateur au moyen d'au moins une caméra (2.2.1), le dispositif d'acquittement (2.2.2) pouvant être commandé au moyen de la commande (2.3) en fonction d'une image correcte prise de la partie du corps (4) de l'utilisateur pour l'émission d'un signal d'acquittement pouvant être perçu de manière optique et/ou acoustique par l'utilisateur.

3. Véhicule (2) selon la revendication 1 ou 2,
**caractérisé en ce que**
au moins une caméra (2.2.1) est montée sur un rétroviseur extérieur (2.2) et/ou sur un rétroviseur intérieur du véhicule (2).

4. Véhicule (2) selon l'une des revendications 1 à 3,
**caractérisé en ce que**
une caméra (2.2.1) est conçue comme une caméra (2.2.1) avec un objectif grand angle, de préférence comme une caméra (2.2.1) avec un objectif fish-eye, et tout particulièrement de préférence comme une caméra (2.2.1) avec un champ de vision supérieur ou égal à 180° et que la commande (2.3) est conçue et configurée pour l'évaluation des signaux de sortie correspondants de la caméra (2.2.1).

5. Véhicule (2) selon l'une des revendications 1 à 4,
**caractérisé en ce que**
la caméra (2.2.1) est conçue et aménagée pour la saisie en image d'au moins une caractéristique biométrique de la partie du corps (4) et la commande (2.3) pour l'évaluation des signaux de sortie de la caméra (2.2.1) correspondant à cette caractéristique biométrique de la partie du corps (4), au moins une caractéristique biométrique de la partie du corps (4) étant conçue comme une caractéristique biométrique permettant de détecter un signe de vie.

6. Véhicule selon la revendication 5,
**caractérisé en ce que**
un dispositif d'éclairage de caméra (2.2.2) du véhicule (2) est associé à au moins une caméra (2.2.1), la plage de longueurs d'onde de la lumière émise par le dispositif d'éclairage de caméra (2.2.2) étant conçue pour être adaptée à la plage de longueurs d'onde de la caméra (2.2.1) correspondante et le dispositif d'éclairage de caméra (2.2.2) étant commandé en fonction d'un état de fonctionnement de la caméra (2.2.1) au moyen de la commande (2.3) pour l'émission de lumière et au moins une caractéristique biométrique étant conçue comme un tracé tridimensionnel d'une surface extérieure ou intérieure de la partie du corps et la lumière pouvant être projetée sur la partie du corps au moyen du dispositif d'éclairage de la caméra selon un modèle défini au préalable.

7. Véhicule selon l'une des revendications 1 à 6,
**caractérisé en ce que**
le composant de véhicule peut en outre être commandé au moyen d'une télécommande portable pour l'exécution de la fonction du véhicule, la télécommande pouvant être commutée automatiquement en fonction d'une activation du composant de véhicule au moyen de la caméra entre un état d'activation, dans lequel le composant de véhicule peut être commandé au moyen de la télécommande, et un état de désactivation, dans lequel le composant de véhicule ne peut pas être commandé au moyen de la télécommande.

8. Procédure l'exploitation d'un véhicule (2) selon l'une des revendications 1 à 7, comprenant un composant de véhicule (2.1) pour l'exécution d'une fonction du véhicule, au moins une caméra (2.2.1) pour la saisie d'images d'une partie du corps (4) d'un utilisateur du véhicule (2) et une commande (2.3) pour la commande de la caméra (2.2.1), pour l'évaluation des signaux de sortie de la caméra (2.2.1) et pour la commande du composant de véhicule (2.1), le composant de véhicule (2.1) et la caméra (2.2.1) étant reliés à la commande (2.3) par la transmission de signaux et la commande (2.3) commandant le composant véhicule (2.1) en fonction de l'évaluation des signaux de sortie correspondant à la saisie d'image de la partie du corps (4) au moyen de la caméra (2.2.1) pour l'exécution de la fonction de véhicule, et dans lequel la caméra (2.2.1) et la commande (2. 3) sont conçues et configurées pour l'exécution d'une autre fonction du véhicule et la commande (2.3) commandant la caméra (2.2.1) en fonction d'un signal de déclenchement appliqué à la commande (2.3) pour l'exécution de la saisie d'image de la partie du corps (4) de l'utilisateur,
**caractérisé en ce que**
une signature commune est générée et/ou mémorisée dans la caméra et dans la commande et que la caméra inscrit la signature commune sur une image prise au moyen de la caméra, cette image prise avec la signature commune étant identifiée à l'aide de la signature commune au moyen de la commande comme une image prise avec la caméra.

9. Procédé selon la revendication 8,
**caractérisé en ce que**
le véhicule (2) est doté d'un dispositif d'acquittement (2.2.2) pour l'acquittement de la saisie d'image de la partie du corps (4) de l'utilisateur au moyen d'au moins une caméra (2.2.1), la commande (2.3) commandant le dispositif d'acquittement (2.2.2) en fonction d'une image correcte prise de la partie du corps (4) de l'utilisateur au moyen de la caméra (2.2.1) pour l'émission d'un signal d'acquittement pouvant être perçu de manière optique et/ou acoustique par l'utilisateur.

10. Procédé selon la revendication 8 ou 9,
**caractérisé en ce que**
au moyen de la caméra (2.2.1) et de la commande (2.3), au moins une caractéristique biométrique de la partie du corps (4) est saisie sous forme d'image et est évaluée, au moins une caractéristique biométrique de la partie du corps (4) étant conçue comme une caractéristique biométrique permettant de détecter un signe de vie.

11. Procédé selon la revendication 10,
**caractérisé en ce que**
un dispositif d'éclairage de caméra (2.2.2) du véhicule (2) est associé à au moins une caméra (2.2.1), la plage de longueurs d'onde de la lumière émise par le dispositif d'éclairage de caméra (2.2.2) étant conçue pour être adaptée à la plage de longueurs d'onde de la caméra (2.2.1) correspondante et la commande (2.3) commandant le dispositif d'éclairage de caméra (2.2.2) en fonction d'un état de fonctionnement de la caméra (2.2.1) pour l'émission de lumière et au moins une caractéristique biométrique étant conçue comme un tracé tridimensionnel d'une surface extérieure ou intérieure de la partie du corps et la lumière étant projetée sur la partie du corps au moyen du dispositif d'éclairage de la caméra selon un modèle défini au préalable.

12. Procédé selon l'une des revendications 8 à 11,
**caractérisé en ce que**
le composant de véhicule peut en outre être commandé au moyen d'une télécommande portable pour l'exécution de la fonction du véhicule, la télécommande étant commutée automatiquement en fonction d'une activation du composant de véhicule au moyen de la caméra entre un état d'activation, dans lequel le composant de véhicule peut être commandé au moyen de la télécommande, et un état de désactivation, dans lequel le composant de véhicule ne peut pas être commandé au moyen de la télécommande.
